# EUROPEAN PATENT SPECIFICATION

(11) **EP 3 975 048 B1**
(45) Date of publication and mention of the grant of the patent: **21.08.2024**
(21) Application number: 20867043.0
(22) Date of filing: 16.09.2020
(51) Int. Cl.: H04L 41/0631, H04L 41/06, G06F 18/243, H04L 41/16, G06F 40/289, H04W 24/04

(54) **METHOD FOR CONSTRUCTING CLOUD NETWORK ALARM ROOT CAUSE RELATIONAL TREE MODEL, DEVICE, AND STORAGE MEDIUM**
VERFAHREN ZUR ERSTELLUNG EINES RELATIONALEN CLOUD-NETZWERKALARMURSACHENBAUMMODELLS, VORRICHTUNG UND SPEICHERMEDIUM
PROCÉDÉ DE CONSTRUCTION DE MODÈLE D'ARBRE RELATIONNEL DE CAUSE RACINE D'ALARME DE RÉSEAU EN NUAGE, DISPOSITIF ET SUPPORT D'ENREGISTREMENT

(30) Priority: 29.09.2019 CN 201910937273
(43) Date of publication of application: 30.03.2022
(73) Proprietor: ZTE Corporation, Shenzhen, Guangdong 518057 (CN)
(72) Inventor: JIANG, Lei, Shenzhen, Guangdong 518057 (CN); ZHOU, Bo, Shenzhen, Guangdong 518057 (CN); SONG, Hanzeng, Shenzhen, Guangdong 518057 (CN); WANG, Chengchun, Shenzhen, Guangdong 518057 (CN)
(74) Representative: Betten & Resch
(86) International application number: PCT/CN2020/115598
(87) International publication number: WO 2021/057576

(56) References cited:
- CN-A- 104 158 682
- CN-A- 107 203 199
- CN-A- 109 146 093
- CN-A- 109 634 819
- SUNG-SU KIM ET AL: "Autonomic fault management based on cognitive control loops", 2012 IEEE NETWORK OPERATIONS AND MANAGEMENT SYMPOSIUM (NOMS 2012) : MAUI, HAWAII, USA, 16 - 20 APRIL 2012, IEEE, PISCATAWAY, NJ, 16 April 2012 (2012-04-16), pages 1104 - 1110, XP032448787, ISBN: 978-1-4673-0267-8, DOI: 10.1109/NOMS.2012.6212036
- MIJUMBI RASHID ET AL: "MAYOR: Machine Learning and Analytics for Automated Operations and Recovery", 2019 28TH INTERNATIONAL CONFERENCE ON COMPUTER COMMUNICATION AND NETWORKS (ICCCN), IEEE, 29 July 2019 (2019-07-29), pages 1 - 9, XP033620581, DOI: 10.1109/ICCCN.2019.8847092
- MARC SOL\'E ET AL: "Survey on Models and Techniques for Root-Cause Analysis", ARXIV.ORG, CORNELL UNIVERSITY LIBRARY, 201 OLIN LIBRARY CORNELL UNIVERSITY ITHACA, NY 14853, 30 January 2017 (2017-01-30), XP080752360

## Description

### TECHNICAL FIELD

Embodiments of the present invention relate to, without limitation, the technical field of communication, in particular to, without limitation, a method, device and computer-readable storage medium for constructing an alarm root-cause relational tree model of a cloud network and a storage medium.

### BACKGROUND

In the field of communication, devices will generate a huge number of alarms, many of which have relevant root-cause relations. In traditional practice, the root-cause relations are mostly determined by factors such as topological links, service relations, professional relations, and alarm severity.

Examples of common alarms in mobile wireless networks are described as follows.

Example one: A 4G wireless base station includes a Base Band Unit (BBU), a Remote Radio Unit (RRU) and an antenna feeder system (an antenna + a feeder). When a maintenance link alarm of the RRU and an abnormal optical module transceiving alarm of the BBU occur within a certain period of time such as 5 min, since the two units are both devices of the same base station in a topological relation and have service relations, the two alarms may be considered to have a root-cause relation and will be merged into primary and secondary alarms, with the maintenance link alarm of the RRU as the primary alarm and the abnormal optical module transceiving alarm of the BBU as the secondary alarm.

When the maintenance link alarm of the RRU and a signaling link failure alarm of the base station occur within a certain period of time, the two alarms will be merged into the primary and secondary alarms because of having direct service relations. As a second-level alarm which is higher than a third-level maintenance link alarm of the RRU, the signaling link failure alarm of the base station is the primary alarm while the maintenance link alarm of the RRU is the secondary alarm.

When such alarms of the BBU, the RRU and/or the signaling link failure alarm and a cell out-of-service alarm of the base station occur within a certain period of time such as 5 min, since the cell is at a higher level in terms of topological relation logic and service relation, the alarms will be merged into the primary and secondary alarms, with the cell out-of-service alarm as the primary alarm and other alarms as the secondary alarms.

Example two: In wireless equipment, an operation and maintenance link (OML) is configured to transmit control commands of the base station. Given that the OML fault alarm and the cell out-of-service alarm occur successively within a certain period of time such as 5 min, although the OML and the cell do not have a strict parent-child relation in the topological relation but service relations, the two alarms may also be considered to have a root-cause relation and will be merged into primary and secondary alarms, with the cell out-of-service alarm as the primary alarm and the OML fault alarm as the secondary alarm.

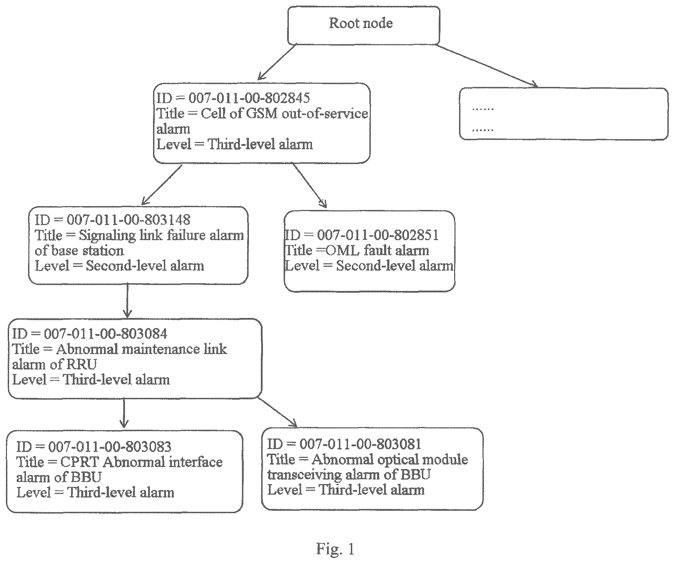

These root-cause relations may form a tree called an alarm root-cause relational tree, as shown in FIG. 1, which can clearly show the primary and secondary root-cause relations.

How to determine the parent-child relations of these alarm root-causes?

There are two traditional common ways in the art. The simple way is to physically determine the relations based on relations in a topological link diagram and service relations under basically unchanged same network topological relation. The complex way is to determine the relations based on factors such as the topological relation, service relation, alarm severity and alarm frequency, as well as the expert experience and field engineering experience, which will form an expert knowledge base.

In traditional communication equipment and networks, such as 2G/3G/4G networks, with collaborative efforts and accumulated practical experience of operators such as China Mobile and equipment manufacturers such as ZTE and Huawei, the primary and secondary root-cause relations of these failures have formed a relatively mature expert knowledge base. That is to say, there is little value in mining and analyzing alarm data in traditional networks, and the mined data model may need some experts to identify its validity manually, while the results may only be supplemented to its mature expert knowledge base in a limited way. For the operators, the loss outweighs the gain, and there is not enough incentive to mine alarm data.

However, with the development of a 5G network, the emergence of virtualization and slicing technologies causes significant changes in core networks and also in access networks. For example, unlike the BBU+RRU architecture of 4G base stations, 5G base stations are redefined as having a Central Unit (CU), a Distributed Unit (DU) and an Active Antenna Unit/Remote Radio Unit (AAU/RRU), with the topological relations and service relations thereof changed.

Note that this network topological hierarchy is not simply a name change, such as changing BBU+RRU to CU+DU+AAU, but a greater change in the network hierarchies as well as in networking mode because of slicing. The 5G network is more complex in both 5G network hierarchies and networking mode such as existing 4G/5G hybrid networks dominated by the 4G network having wide-area coverage, with the 5G network covering key hotspot regions. Moreover, in the future, changes will be even more complex, with more uncertainty in the network hierarchies than that in traditional networks.

During the network transformation, the knowledge base cannot be updated in time, and the depth hierarchy of the original knowledge base cannot meet the hierarchical merge of alarms of new networks and new services. Moreover, the common method of determining alarm root-cause relations based on the topological link diagram will be significantly less effective in a complex 5G slicing network.

On the one hand, the alarm root-cause relations will change greatly. On the other hand, the service relations and topological relations of the original traditional networks and the alarm services are still partially effective in a 4G/5G hybrid network. In this case, the traditional expert knowledge base is still useful, yet it cannot adequately process new alarm services.

That is to say, traditional methods in the industry have obvious shortcomings. Simple methods such as using a topological link diagram has the disadvantage that the topological link diagram only shows a local topology of the entire network, so there are too few hierarchies of the topology to correlate the alarm correlations of the entire network, i.e., the alarm root-cause relational tree is not well modeled for growth. However, with the significant change in network topological relation and service relation caused by 5G slicing, as well as the complexity of networking mode, the empirical knowledge base mode cannot effectively and quickly model the alarm root-cause relational tree for new networks and new services.

SUNG-SU KIM ET AL: "Autonomic fault management based on cognitive control loops", XP032448787, relates to a fault management approach based on cognitive control loops in order to support autonomic network management for the Future Internet. The cognitive control loops determines urgency of network alarms, processes urgent alarms more quickly, and then infers root causes of the problems based on learning and reasoning.

### SUMMARY

Embodiments of the present invention provides a method, device and computer-readable storage medium for constructing an alarm root-cause relational tree model of a cloud network and a storage medium, so as to at least solve the technical problems to a certain extent, i.e., how to quickly and accurately remodel the alarm root-cause relational tree in a cloud network for a new network based on currently known alarm root-cause relational tree models of traditional networks.

In order to at least solve the above technical problems to a certain extent, a method for constructing an alarm root-cause relational tree model of a cloud network is provided according to an embodiment of the present invention, including: mining first alarm data of a traditional network based on a frequent itemset to obtain a first alarm tree model, and taking a traditional expert knowledge base as a label to extract features of the first alarm tree model to obtain first feature parameters; self-defining classification types based on a default classification rule, and determining classification weight values corresponding to respective classification types in the first alarm tree model by machine learning; and mining second alarm data of a network to be modeled in the cloud network based on the frequent itemset, and modeling the second alarm data using the classification weight values by machine learning to obtain a second alarm tree model, where the second alarm data are root-cause data; before mining first alarm data of a traditional network based on a frequent itemset to obtain a first alarm tree model, further comprising initializing, wherein initializing comprises: initializing a topological relation or a service relation or a professional relation or an alarm severity or an expert knowledge base of network element equipment according to a standard and a specification of an operator, and initializing a word segmentation list, wherein the word segmentation list contains keywords for segmenting a descriptive statement; after initializing and before mining first alarm data of a traditional network based on a frequent itemset to obtain a first alarm tree model, further comprising: extracting a rule base that generates primary and secondary alarm data from the expert knowledge base, wherein the rule base takes the primary and secondary alarm data as parent and child nodes of the tree model to form a parent-child relation tree model, the primary alarm data are the parent nodes and the secondary alarm data are the child nodes, and the rule base further comprises constraint conditions on the alarm data.

A device for constructing an alarm root-cause relational tree model of a cloud network is further provided according to an embodiment of the present invention, including a processor, a memory and a communication bus. The communication bus is configured for communication between the processor and the memory. The processor is configured to execute one or more computer programs stored in the memory to perform the method for constructing an alarm root-cause relational tree model of a cloud network described in the embodiment of the present invention.

A computer storage medium storing one or more computer programs is further provided according to an embodiment of the present invention, where the one or more programs, when executed by one or more processors, cause the one or more processors to perform the method for constructing an alarm root-cause relational tree model of a cloud network described in the embodiment of the present invention.

Other features and corresponding beneficial effects of the present invention are described below in the description, and it should be understood that at least some of the beneficial effects become apparent from the description of the present invention.

### BRIEF DESCRIPTION OF DRAWINGS

FIG. 1 is a schematic diagram of a simple alarm root-cause relational tree model of a traditional network;
FIG. 2 is a flow chart of a method for constructing an alarm root-cause relational tree model of a cloud network according to Embodiment One of the present invention;
FIG. 3 is an entire operational process of the method for constructing an alarm root-cause relational tree model of a cloud network according to an embodiment of the present invention;
FIG. 4 is a flow chart of designing and presenting the method of modeling an alarm root-cause relational tree in a cloud network on AI Studio according to the embodiment of the present invention;
FIG. 5 is a flow chart of extracting an expert knowledge base to obtain parent-child relations according to Embodiment Three of the present invention;
FIG. 6 is a flow chart of mining an alarm frequent itemset according to the Embodiment Three of the present invention;
FIG. 7 is a flow chart of featurizing according to the Embodiment Three of the present invention;
FIG. 8 is a flow chart of modeling an alarm root-cause relational tree according to the Embodiment Three of the present invention; and
FIG. 9 is a schematic structural diagram of a device for constructing an alarm root-cause relational tree model of a cloud network according to Embodiment Four of the present invention.

### DETAILED DESCRIPTION

In order to make the objective, technical schemes and advantages of the present invention clearer, embodiments of present invention will be further described in detail below by embodiments in conjunction with the accompanying drawings. It should be understood that the embodiments described herein are not used for limiting the present invention but merely for illustrating the present invention.

### Embodiment One

At present, traditional methods in the industry have obvious shortcomings. Simple methods such as using a topological link diagram has the disadvantage that the topological link diagram only shows a local topology of the entire network, so there are too few hierarchies of the topology to correlate the alarm correlation of the entire network, i.e., the alarm root-cause relational tree is not well modeled for growth. However, with the significant change in network topological relation and service relation caused by 5G slicing, as well as the complexity of networking mode, the empirical knowledge base mode cannot effectively and quickly model the alarm root-cause relational tree for new networks and new services.

However, the original internal logic of determining the alarm root-cause relations has not changed greatly, and thus the relations are still determined by factors such as the topological relation, service relation, professional relations, alarm severity, and alarm frequency. These factors, such as topological relation, service relation and alarm severity, are all defined in advance and remain constant, and the alarm frequency and other factors may also be obtained by mining history alarm data. However, the weights of these factors for forming final alarm root-cause relations are not yet known, but may be subject to machine learning.

Similarly, weight influences of these factors may be considered for the root-cause relations of alarms in a 5G network (a new network). These weight influences are not easy to calculate, and will be obtained by learning from expert knowledge bases of traditional networks by machine learning. A new alarm root-cause relational tree model is formed by the learned weight influences for alarm root-cause analysis of the new 5G network or a 4G/5G hybrid network.

That is, the traditional expert knowledge base is an artificial experience base in the process of 2G/3G/4G. Parameters and capabilities rather than specific network topology and service relations are learned from the traditional expert knowledge base. With the expansion and popularization of 5G networks and the hybrid networking of 5G networks and traditional networks, new equipment and new services are introduced, and the uncertainty of the system will be greatly increased. However, by means of this intelligent learning mechanism, the systems can also automatically adapt to learn the influencing factors that influence the intrinsic certainty of alarm root-causes to form a relatively complete expert knowledge base of the 5G network, which is an expert knowledge base formed by AI and human efforts, and can meet the expanded network topology and service relations.

In order to quickly and accurately determine the interrelations between alarms in the new network before the new network is gradually laid, a new alarm root-cause relational tree model in the sliced cloud network is established to assist operators to process alarms in intelligent operation and maintenance.

A method for constructing an alarm root-cause relational tree model of a cloud network is provided according to an embodiment of the present invention. The method includes: mining first alarm data of a traditional network based on a frequent itemset to obtain a first alarm tree model, and taking a traditional expert knowledge base as a label to extract features of the first alarm tree model to obtain first feature parameters; self-defining classification types based on a default classification rule, and determining classification weight values corresponding to respective classification types in the first alarm tree model by machine learning; and mining second alarm data of a network to be modeled based on the frequent itemset, and modeling the second alarm data using the classification weight values by machine learning to obtain a second alarm tree model, where the second alarm data are root-cause data.

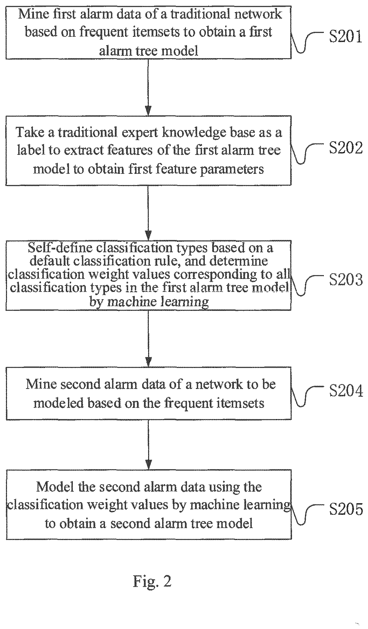

FIG. 2 is a flow chart of a method for constructing an alarm root-cause relational tree model of a cloud network according to this embodiment. As shown in, the method includes following steps.

In a step of S201, first alarm data of a traditional network are mined based on a frequent itemset to obtain a first alarm tree model.

In this embodiment, mining the traditional network based on the frequent itemset is a means of mining data of the traditional network by a default algorithm. Common data mining algorithms such as Apriori or FP Growth may be used to obtain a combination of the alarm frequent itemset, which is also a candidate combination of the alarm root-cause relational tree model.

In a step of S202, a traditional expert knowledge base is taken as a label to extract features of the first alarm tree model to obtain first feature parameters.

After the first alarm data and the corresponding first alarm tree model are obtained in the step of S201, these data and model may be analyzed and subject to feature extraction. The basis or label for analysis and feature extraction herein is the traditional expert knowledge base accumulated under the traditional network.

In a step of S203, classification types are self-defined based on a default classification rule, and classification weight values corresponding to respective classification types in the first alarm tree model are determined by machine learning.

After the first alarm data, the first alarm data model and the first feature parameters are obtained, the data may be classified based on a certain classification rule, and the data after classification facilitate statistics and calculation.

After the data are classified, as the importance and occurrence frequency of the data classified as different types are significantly different in different networks and at different nodes, the classification weight values of each classification may be determined by machine learning, and the importance of data may be determined by the classification weight values.

In a step of S204, second alarm data of a network to be modeled are mined based on the frequent itemset.

After the classification weight values of different data classifications in the traditional network are obtained, a new network is modeled. In this case, the second alarm data of the network to be modeled are mined by a method similar to that in the step S201, where the second alarm data are root-cause data.

In a step of S205, the second alarm data are mined using the classification weight values by machine learning to obtain a second alarm tree model.

In this embodiment, prior to the step of S201 in which the first alarm data of the traditional network are mined based on the frequent itemset to obtain the first alarm tree model, the method further includes a step of: initializing, which includes: initializing the topological relation or service relation or professional relation or alarm severity or expert knowledge base of network element equipment according to standards and specifications of operators, and initializing a word segmentation list which contains keywords for segmenting a descriptive statement.

In this embodiment, after the step of initializing the traditional network, the method further includes a step of: extracting a rule base that generates primary and secondary alarm data from the expert knowledge base. The rule base takes the primary and secondary alarm data as parent and child nodes of the tree model to form a parent-child relation tree model, i.e., the primary alarm data are the parent nodes and the secondary alarm data are the child nodes, and the rule base further includes constraint conditions on the alarm data.

In this embodiment, the step of S201 in which the first alarm data of the traditional network are mined based on the frequent itemset to obtain the first alarm tree model includes, without limitation, a step of: mining the traditional network by a default mining algorithm to obtain a combination of frequent itemset of the first alarm data, where the combination of the frequent itemset of the first alarm data may serve as a candidate combination of the first alarm root-cause relational tree model. The default mining algorithm includes, without limitation, an Apriori algorithm or an FP Growth algorithm.

In this embodiment, the step of mining the traditional network by a default mining algorithm includes full-volume alarm data mining and specified alarm data mining. The full-volume alarm data mining is to mine all alarms, and the specified alarm data mining is to perform subdivided mining on related alarm data obtained for the first time according to time intervals and interrelations.

In this embodiment, the step of S203 in which classification types are self-defined based on a default classification rule includes a step of: defining a plurality of dimensions as features for classification based on a default dimension classification rule. Dimensions include: the topological relation or service relation or professional relation or alarm severity or support and confidence of frequent itemset or alarm occurrence interval or alarm occurrence count of network elements among the alarms. The topological relation or service relation or professional relation or alarm severity are determined according to operators' networks and remain constant. The support and confidence of frequent itemset or alarm occurrence interval or alarm occurrence count are obtained by normalizing the first feature parameters.

In this embodiment, training data and testing data adopted for the machine learning are the alarm frequent itemset of the traditional network. Machine learning algorithm includes: a classification algorithm for machine learning, and the classification algorithm includes any one of decision tree, random forest, logistic regression or perception.

In this embodiment, after the classification weight values are determined in the step S203 and before the network to be modeled is mined in the step of S204, the method further includes initializing the network to be modeled, and initializing the network for a second time, which includes: initializing the topological relation or service relation or professional relation or alarm severity or expert knowledge base of network element equipment according to standards and specifications of operators, and initializing a word segmentation list which contains keywords for segmenting a descriptive statement.

In this embodiment, the step of mining second alarm data of a network to be modeled based on the frequent itemset includes a step of: mining the network to be modeled by a default mining algorithm to obtain a combination of the frequent itemset of the second alarm data. The frequent itemset combination of the second alarm data may serve as a candidate combination of the second alarm root-cause relational tree model, where the second alarm data of the network to be modeled are mined in full volume. As the network to be modeled is a new network, when mining the second alarm data and the second alarm root-cause relational tree model, full-volume data may be mined for the network to be modeled to ensure the accuracy of modeling.

A method for constructing an alarm root-cause relational tree model of a cloud network is provided according to an embodiment of the present invention as claimed in independent claim 1.

By machine learning, the corresponding classification weight values of the first alarm tree model mined from the traditional network are determined according to different classification types. In the network to be modeled, the second alarm data mined are modeled by the same machine learning using the classification weight values obtained from the traditional network to obtain the second alarm tree model, thus establishing the alarm root-cause relational tree model of the new network on the basis of the traditional network, and at the same time, making the establishment process of the model more flexible and accurate by machine learning.

### Embodiment Two

This embodiment is not claimed as such.

A method for constructing an alarm root-cause relational tree model of a cloud network is provided according to the embodiment, including mining alarm data, learning from a traditional knowledge base, analyzing correlations of alarms to obtain weights of respective dimensions for determining root-cause relations of the alarms, and forming a root-cause relational tree model in a 4G/5G hybrid network and a 5G slicing network by using the weights to the alarms of the 5G slicing network.

In this embodiment, the alarm data of traditional networks are first mined by a frequent itemset, and features of the alarm root-cause relational tree model are extracted by taking the traditional expert knowledge base as a label. Weights of the alarm root-cause parameters are obtained by machine learning, such as logical regression. The alarm data of the 5G network are calculated to obtain the frequent itemset. Parent-child relations are obtained by the learned model to finally form the alarm root-cause relational tree model of the 5G slicing network.

The method for constructing an alarm root-cause relational tree model of a cloud network in this embodiment includes following steps.

In a step one, the topological relation or service relation or professional relation or alarm severity or expert knowledge base of network element equipment is initialized according to standards and specifications of operators. A word segmentation list which contains keywords, such as "minute", "occurrence", "as", "other", "if any", and "association", for segmenting a descriptive statement, is initialized. These keywords will be useful in extracting rules from the expert knowledge base.

In a step two, a rule base that generates primary and secondary alarms is extracted from the expert knowledge base. The primary and secondary alarms are taken as parent and child nodes of the tree to form a parent-child relation tree, i.e., the primary alarms are the parent nodes and the secondary alarms are the child nodes. In addition to the primary and secondary relation, constraints such as the time interval between two alarms and the location relation also may be obtained.

In a step three, the alarm data of a traditional network are mined based on the frequent itemset to obtain a set of candidate combinations of the tree model. Common data mining algorithms such as Apriori or FP Growth may be used to obtain a combination of the alarm frequent itemset, which is also a candidate combination of the alarm root-cause relational tree model. The entire mining process includes full-volume alarm mining and specified alarm mining. The full-volume alarm mining is to mine all alarms, and the specified alarm mining is to mine related alarms obtained in the step one. Because of different time intervals and correlations, subdivided mining is required.

In a step four, the set of candidate combinations of the tree model is featurized. A plurality of dimensions, such as the topological relation or service relation or professional relation or alarm severity or support and confidence of frequent itemset or alarm occurrence interval or alarm occurrence count of network elements among the alarms, are defined as features, where the topological relation or service relation or professional relation or alarm severity are determined by the operator network and fixed, and the features such as the support and confidence of frequent itemset or alarm occurrence interval or alarm occurrence count are calculated in the step three and normalized. Featurization and definition and learning of dimensions are core inventive highlights hereof. Given that the dimension definition is not accurate, the entire machine learning process will be relatively low in accuracy, and the tree will not be effectively modeled. Based on this logic, the tree can be modeled by other steps only when this step is effective.

In a step five, the feature parameter weights are obtained by machine learning. Although the features of these dimensions are available, which one has higher weight, which one is more significant, or how to obtain the primary-secondary relation given that some dimensions are consistent and others are not, may be determined by machine learning. Training data and testing data adopted for the machine learning are the alarm frequent itemset of the traditional network, and the parent-child relations obtained in the step three are taken as labels. Since the two alarms are primary and secondary alarms or defined as a parent and child alarms, the primary-secondary relation of the two alarms may be determined for classifying the alarms, with one as the primary alarm and the other as the secondary alarm or not. In this process, classification algorithms, such as decision tree or random forest or logical regression or perception, may be adopted for learning.

In a step six, alarm data of a 4G/5G hybrid network and a 5G slicing network are mined based on the frequent itemset to obtain a set of candidate combinations of the tree model. The candidate combinations of parent-child relations of the alarm root-causes are obtained in a way similar to that in the step two. Mining herein is full-volume data mining which is also required for alarms in the traditional networks. Since there may be changes in the topological relation and service relation thereof, the alarm data may be re-mined.

In a step seven, the features of the set of alternative combinations of the tree model, such as the topological relation or service relation or professional relation or alarm severity or support and confidence of frequent itemset or alarm occurrence interval or alarm occurrence count, are calculated and normalized. Note that the 5G slicing network has significant changes in the topological relation or service relation, and a correlation between network elements and slices or sub-slices is added, which is different from the traditional networks, but these relations are all determined and defined upon initialization, and only the support and confidence of frequent itemset or alarm occurrence interval or alarm occurrence count are obtained based on the mining results in the step five.

In a step eight, classification results for modeling feature vectors in the step seven are predicted using a previously trained logistic regression model to obtain a parent-child relation of every two alarms.

In a step nine, an alarm root-cause relational tree model is finally formed based on the parent-child relations of the alarms.

Note that the new alarm root-cause relational tree model will not be directly input into the expert knowledge base, but can provide a good reference for the new knowledge base.

In a step ten, an alarm service expert may edit the alarm root-cause relational tree, feedback a real influence reason, that is, which dimension is more effective, and use an adjustment result as a label to improve the alarm root-cause relational tree by secondary learning.

A method for constructing an alarm root-cause relational tree model of a cloud network is provided according to this embodiment of the present invention, which is configured to model an alarm root-cause relational tree in a current 5G slicing network. Compared with modeling methods of existing traditional networks, the method according to the embodiment of the present invention has the advantages as follows. 1. The tree model adopted can grow well, so any new types of alarms newly generated for new services and topologies are easily attached to the tree model. 2. The tree model can process hierarchical networks, so it is more flexible than the knowledge base which can only process two hierarchies. 3. The tree model can provide a good reference for the alarm root-cause models of complex 5G slicing networks and services. 4. The tree model can provide a good reference for operators to merge and suppress alarms. 5. The tree model itself is easy for edition, and can be adjusted by editing when the model is incorrect.

### Embodiment Three

This embodiment is not claimed as such.

Another embodiment of a method for constructing an alarm root-cause relational tree model of a cloud network is provided according to this embodiment, which includes following steps.
I. An entire system architecture process in this embodiment:
   The topological relation or professional relation or service relation or alarm severity and an expert knowledge base of a network are initialized first.

Alarm data of a traditional network are mined to obtain a frequent itemset which is featurized and subject to machine learning based on an expert knowledge base to obtain a classification model, and parent-child relations of every two types of alarms are obtained to form an alarm root-cause relational tree model of the traditional network. The classification model will be released by a machine learning system for direct use by subsequent 5G slicing data.

Alarm data of a 5G slicing network or a 4G/5G hybrid network are mined to obtain a frequent itemset which is featurized, and subject to learning, and parent-child relations of every two types of alarms are obtained using a learned classification model to form an alarm root-cause relational tree model of the 4G/5G hybrid network and the 5G slicing network.

This tree may not be accurate but may be edited by users. The edited tree is sent by a feedback system back to serve as a label for secondary learning. The process from editing to secondary learning may not fall within the scope of patent protection, but may be merely used for complete description of the entire system.

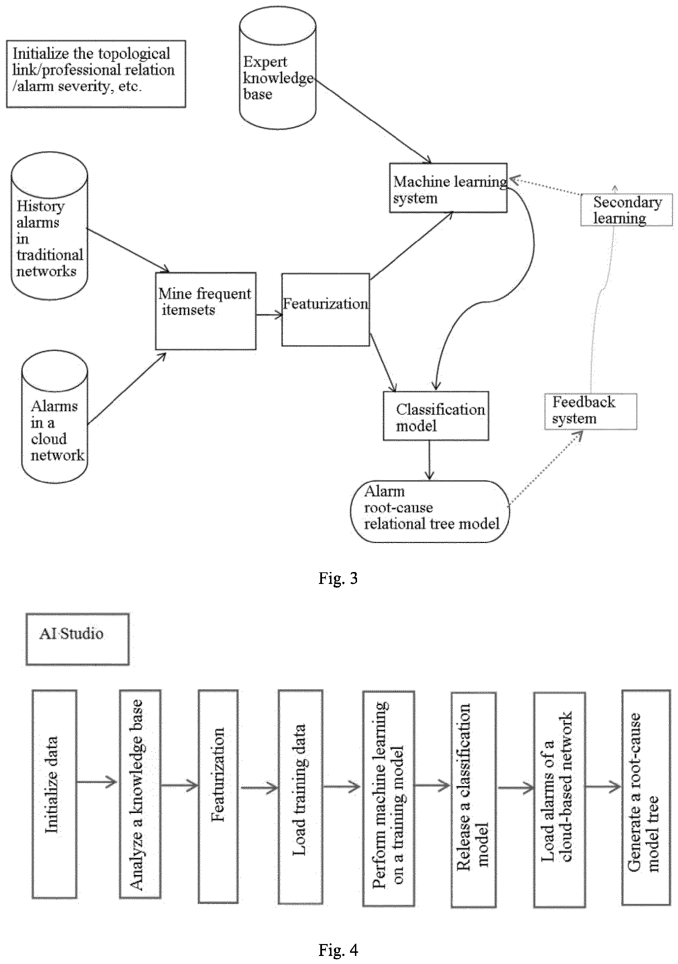

As shown in FIGS. 3 and 4, FIG. 3 shows an entire operational process of the system. FIG. 4 is a flow chart of designing and demonstrating this process on AI Studio.

### II. Extraction of an expert knowledge base to obtain parent-child relations

The expert knowledge base including standards and specifications of operators and equipment manufacturers is parsed to obtain the topological relation or service relation or professional relation, parent-child alarm IDs and alarm rules. The alarm rules may be determined by other auxiliary conditions in addition to describing correlations between parent and child alarms in a time window.

For example, the last rule in FIG. 1 is read as follows: "In case of out of service of a base station, whether there is a DC under-voltage alarm or a power failure alarm in a corresponding dynamic environment is determined first, if yes, the alarm are correlated." The words in this rule will be segmented based on an initialized word segmentation list. For example, in this rule, the word entries such as "if yes" or "correlated" or "whether" or "there is" will be adopted to obtain a necessary condition "DC under-voltage alarm or a power failure alarm", and the parent-child relations are obtained based on alarm codes and alarm obj ects.

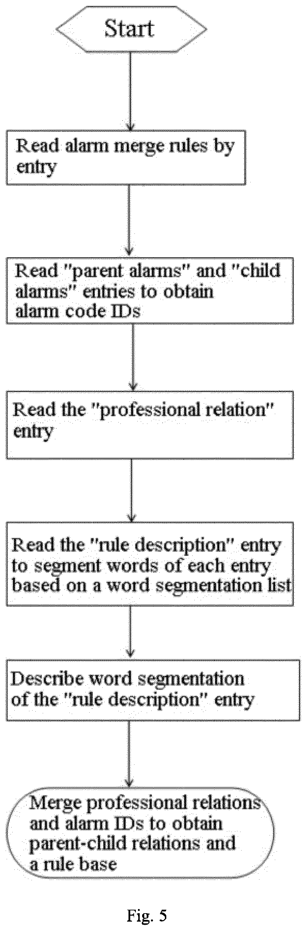

Note that learning is not performed by Natural Language Processing (NLP) in word segmentation because these words in the rule are very standard and can be obtained by hard coding. As shown in Table 1 and FIG. 5, Table 1 shows partial samples of an expert knowledge base, and FIG. 5 is a flow chart of extracting an expert knowledge base to obtain parent-child relations.

**Table 1 Partial Samples of Expert Knowledge Base**

| Link mode | Professi onal relation | Rule description | Enable or not | Parent/derived alarm condition | Child alarm/derived alarm condition |
|---|---|---|---|---|---|
| Prima ry and secon dary relatio n | Wireles s networ k | An cell out-of-service alarm and other alarms of a GSM and other warnings occur within 5 min, with the cell out-of-service alarm as a primary alarm and other alarms as secondary alarms | Enabled | Network management alarm ID = "007-011-00-802845 " | Network management alarm ID = "007-011-00-802851" |
| | | | | | Network management alarm ID = "007-011-00-803083" |
| | | | | | Network management alarm ID = "007-011-00-803148" |
| | | | | | Network management alarm ID = "007-011-00-803149" |
| | | | | | Network management alarm ID = "007-011-00-803081" ; |
| | | | | | Network management alarm ID = "007-011-00-801246" |
| | | | | | Network management alarm ID = "007-011-00-801231" ; |
| Prima ry and secon dary relatio n | Wireles s networ k | A signaling link failure alarm of a base station and an abnormal maintenance link alarm of an RRU occur within 5 min, with the signaling link failure alarm of the base station as the primary alarm, and the other as the secondary alarm | Enabled | Network management alarm ID = "007-011-00-803148 " | Network management alarm ID = "007-011-00-803084" |
| Prima ry and secon dary relatio n | Wireles s networ k | An abnormal maintenance link alarm of the RRU and an abnormal CPRT interface alarm of a BBU occur within 5 min, with the abnormal maintenance link alarm of the RRU as the primary alarm, and the other as the secondary alarm | Enabled | Network management alarm ID = "007-011-00-803084 " | Network management alarm ID = "007-011-00-803083" |
| Prima ry and secon dary relatio n | Wireles s networ k | An abnormal maintenance link alarm of the RRU and an abnormal optical module transceiver of the BBU occur within 5 min, with the abnormal maintenance link alarm of the RRU as the primary alarm, and the other as the secondary alarm. | Enabled | Network management alarm ID = "007-011-00-803084 " | Network management alarm ID = "007-011-00-803081" |
| Prima ry and secon dary relatio n | Wireles s networ k | A cell service unavailable alarm of the GSM and an abnormal optical module transceiver of the BBU occur within 5 min, with the cell service unavailable alarm of the GSM as the primary alarm, and the other as the secondary alarm | Enabled | Network management alarm ID = "007-011-00-802845 " | Network management alarm ID = "007-011-00-803081" |
| Prima ry and secon dary | Internet work | In response to out of service of the base station, whether there is a DC | Enabled | Alarm object type = "", and alarm subtype = "out of service alarm" | Network management alarm ID in ("691-006-00-006901 ", |
| relatio n | | under-voltage alarm or a power failure alarm in a corresponding dynamic environment is determined first, if so, the alarm are correlated | | | "614-002-00-002010" , "630-000-00001", "614-075-00-075001" , "614-075-00-075002" , and "614-075-00-075010" ) Professional = "transport network" |

### III. Mining of a frequent itemset of alarm data:

As all correlated alarms occur within a certain time window, the alarm data sorted by occurrence time may be mined to obtain a frequent itemset.

Before being mined, the alarm data may be cleaned to filter out alarms without obvious topological network element location or alarm code and with unclear services, which do not may be mined.

In case of full-volume alarm data, a maximum time window is adopted. In case of specified alarms, a specified time window is adopted.

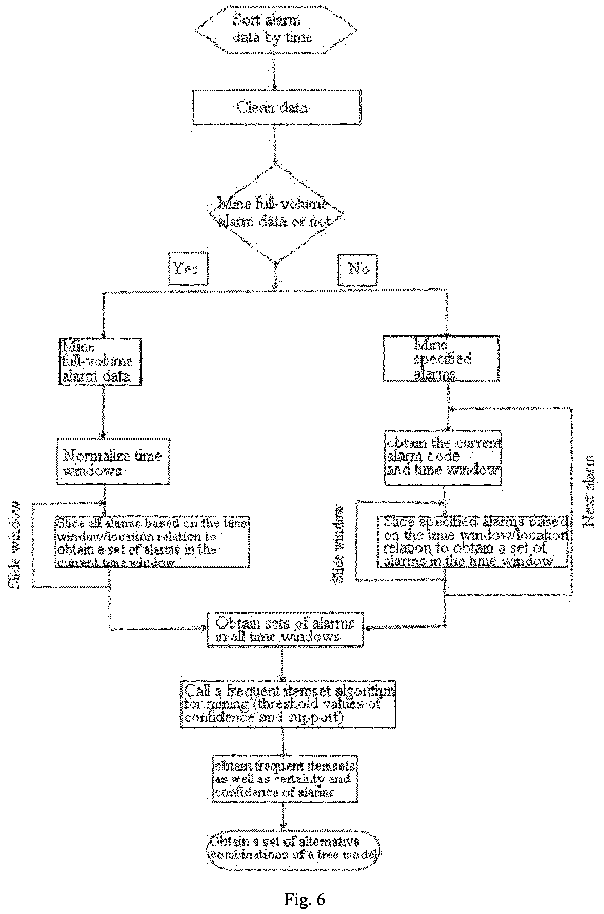

The mined alarm data are calculated by a frequent itemset algorithm. In case of adopting Apriori algorithm, threshold values of confidence and support are determined in advance. Note that the value is just a frequent itemset and is not necessarily correlated, as shown in FIG. 6 which is a flow chart of mining an alarm frequent itemset.

### IV Featurization:

The above seven features, such as the topological relation or service relation or professional relation or alarm severity or confidence of frequent itemset or alarm occurrence interval or alarm occurrence count of network elements among the alarms, are only examples. Of course, features are not limited to these features.

Normalization of all data other than the alarm severity is to process the data in each dimension into 1 and 0.

The alarm severity is a dimension with a value specified by the alarm severity. In general, the alarm with higher severity is more prominent in the alarm root-cause relational tree model.

In terms of the topological relation, for example, in case that two alarms A and B occur in the BBU and the base station, respectively, the topological relation thereof have two dimensions, i.e., the topological relation is that A is a parent and B is a child, and the topological relation is that B is not the parent of A. Herein, the value of the first dimension is 0 while that of the second dimension is 1. In case that there is no hierarchical topological relation between the alarms, both the values are 0, and the service relations are processed in the same way.

The professional relations are processed in six dimensions such as wireless/data/transmission/core/dynamic environment/internetwork. For example, in case of a wireless network, the value of the wireless network dimension is 1 and that of other dimensions is 0.

The last three features are obtained by mining a frequent itemset and also may be normalized.

No support but only confidence of the frequent itemset is adopted because the support of the two alarms A and B is the same in case of mining the two alarms. In the whole set, the alarms A and B occur at the same frequency, regardless of whether A supports B or B supports A. However, the case of confidence is different, which refers to the occurrence frequency of B in response to occurring A, and the occurrence frequency of A in response to occurring B, and the frequency may be different. The confidence is normalized to determine the value to be 1 or 0 by whether it is greater than 0.5.

The alarm occurrence interval will have three dimensions, i.e., the value of dimensions is 1 or 0 within 5/10/20 min, respectively. Note that, in case of 5 min, the value of the interval dimension of 5 is 1 and the value of other two dimensions is 0.

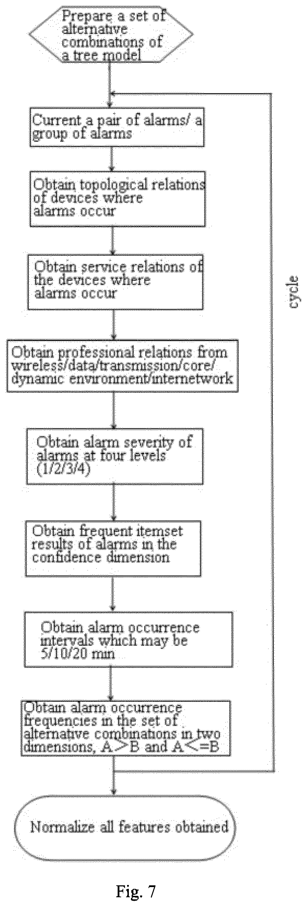

Alarm occurrence count refers to an occurrence count of this alarm, which will have two dimensions. For example, In case that two alarms A and B occur, where A occurs more frequently than B, and A does not occur more frequently than B, respectively, the value of the dimension is 1/0, as shown in FIG. 7, which is a flow chart of featurizing.

### V Machine learning on the knowledge base to obtain a classification model of parent-child alarms

The knowledge base is learned by machine learning to obtain weight values of all dimensions of the above features.

Supervised classification learning algorithms, such as logical regression, decision tree and random forest algorithms, may be adopted.

This process is not complicated but mature. For example, a mature model algorithm base is available for logical regression.

### V Construction of the alarm root-cause relational tree model

A new alarm root-cause relational tree will be modeled for all new alarms generated in a 5G network or a 3G/4G/5G hybrid network.

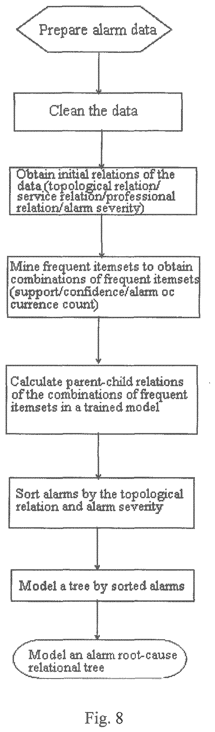

The topological relation or service relation or professional relation or alarm severity of the network are initialized first to obtain candidate combinations by mining the frequent itemset, and the model is obtained by learning and training, namely, the weight values of all dimensions of these features. The classification model obtained by machine learning is directly called to obtain the parent-child relations of all combinations based on the weight values. All the parent-child relations are merged into a tree, which is the alarm root-cause model tree, as shown in FIG. 8, which is a flow chart of modeling an alarm root-cause relational tree.

The obtained alarm root-cause relational tree model will assist operators in intelligently designating requests to locate the real alarm root-cause.

### Embodiment Four

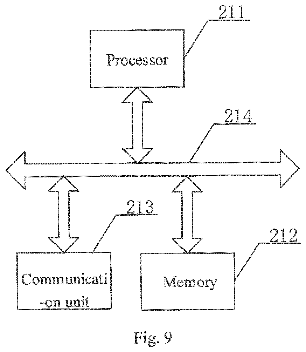

A device for constructing an alarm root-cause relational tree model of a cloud network is provided according to this embodiment, as shown in FIG. 9, including a processor 211, a memory 212, a communication unit 213, and a communication bus 214.

The communication bus 214 is configured for communication among the processor 211, the communication unit 213 and the memory 212.

The processor 211 is configured to execute one or more programs stored in the memory 212 to perform the steps of the method for constructing an alarm root-cause relational tree model of a cloud network provided according to the embodiment of the present invention.

The steps and specific processes performed by each module in the device may refer to the above processes in each embodiment, which will not be repeated herein.

This embodiment also provides a computer-readable storage medium, including volatile or nonvolatile, removable or non-removable media implemented in any method or technology for storing information, such as computer-readable instructions, data structures, computer program modules or other data. A computer-readable storage medium includes, without limitation, Random Access Memory (RAM), Read-Only Memory (ROM), Electrically erasable programmable read-only memory (EEPROM), flash memory or other memory technologies, Compact Disc Read-Only Memory (CD-ROM), digital versatile disc (DVD) or other optical disc memory, cartridge, tape, disk memory or other magnetic memory devices, or any other media configured to store desired information and accessed by a computer.

In this embodiment, the computer-readable storage medium may be configured to store one or more computer programs which, when executed by one or more processors, cause the one or more processors to perform the steps of the method for constructing an alarm root-cause relational tree model of a cloud network described in the above embodiments one to three.

According to the method and device for constructing an alarm root-cause relational tree model of a cloud network provided in the embodiments of the present invention, by machine learning, the corresponding classification weight values of the first alarm tree model mined from the traditional network are determined according to different classification types. In the network to be modeled, the second alarm data mined are modeled by the same machine learning using the classification weight values obtained from traditional networks to obtain the second alarm tree model, thus modeling the alarm root-cause relational tree for new networks on the basis of the traditional networks, and at the same time, making the establishment process of the model more flexible and accurate by machine learning.

Therefore, those having ordinary skill in the art should understand that all or some of the steps, systems and functional modules/units in the devices disclosed above can be implemented as software (which may be implemented by computer program codes executable by a computing device), firmware, hardware and appropriate combinations thereof. In the implementations by hardware, the division between the functional modules/units mentioned in the above description does not necessarily correspond to the division of physical components. For example, a physical component may have a plurality of functions, or a function or step may be performed cooperatively by several physical components. Some or all of the physical components may be implemented as software executed by a processor, such as CPU, a digital signal processor or a microprocessor, or as hardware, or as an integrated circuit, such as an application specific integrated circuit.

Furthermore, it is well known to those having ordinary skill in the art that communication media typically contain computer-readable commands, data structures, computer program modules, or other data in modulated data signals such as carrier transmission or other transmission mechanisms, and may include any information delivery media. Therefore, the present invention is not limited to any particular combination of hardware and software.

The above descriptions are further detailed descriptions of the embodiments of the present invention with reference to specific implementation ways, and it cannot be assumed that the specific implementation ways of the present invention are limited to these descriptions. For those having ordinary skill in the art to which the present invention belongs, a number of simple derivations or substitutions may also be made without departing from the scope of the present invention, all of which should be regarded as falling into the protection scope of the present invention. The invention is defined in the independent claims as appended. Advantageous features are defined in the dependent claims.

## Claims

1. A method for constructing an alarm root-cause relational tree model of a cloud network, comprising:
mining first alarm data of a traditional network based on a frequent itemset to obtain a first alarm tree model (S201), and taking a traditional expert knowledge base as a label to extract a feature of the first alarm tree model to obtain a first feature parameter (S202);
self-defining a plurality of classification types based on a default classification rule, and determining a classification weight value corresponding to each of the plurality of classification types in the first alarm tree model by machine learning (S203); and
mining second alarm data of a network to be modeled in the cloud network based on the frequent itemset (S204), and modeling the second alarm data using the classification weight value by machine learning to obtain a second alarm tree model, wherein the second alarm data are root-cause data (S205);
before mining first alarm data of a traditional network based on a frequent itemset to obtain a first alarm tree model (S201), further comprising initializing, wherein
initializing comprises: initializing a topological relation or a service relation or a professional relation or an alarm severity or an expert knowledge base of network element equipment according to a standard and a specification of an operator, and initializing a word segmentation list, wherein the word segmentation list contains keywords for segmenting a descriptive statement;
after initializing and before mining first alarm data of a traditional network based on a frequent itemset to obtain a first alarm tree model, further comprising: extracting a rule base that generates primary and secondary alarm data from the expert knowledge base, wherein
the rule base takes the primary and secondary alarm data as parent and child nodes of the tree model to form a parent-child relation tree model, the primary alarm data are the parent nodes and the secondary alarm data are the child nodes, and the rule base further comprises constraint conditions on the alarm data.

2. The method of claim 1, wherein mining first alarm data of a traditional network based on a frequent itemset to obtain a first alarm tree model (S201) comprises: mining the traditional network by a default mining algorithm to obtain a combination of the frequent itemset of the first alarm data, wherein the combination of the frequent itemset of the first alarm data can serve as a candidate combination of the first alarm root-cause relational tree model.

3. The method of claim 2, wherein mining the traditional network by a default mining algorithm comprises full-volume alarm data mining and specified alarm data mining, wherein
the full-volume alarm data mining is to mine all alarms; and
the specified alarm mining is to perform subdivided mining on alarm data obtained for the first time according to time intervals and interrelations.

4. The method of claim 1, wherein self-defining classification types based on a default classification rule comprises: defining a plurality of dimensions as features for classification based on a default dimension classification rule, wherein
the plurality of dimensions comprise: a topological relation or a service relation or a professional relation or an alarm severity or a support and confidence of frequent itemset or an alarm occurrence interval or an alarm occurrence count of network elements among the alarms;
the topological relation or a service relation or a professional relation or an alarm severity are determined according to operators' networks and remain constant; and
the support and confidence of frequent itemset or an alarm occurrence interval or a alarm occurrence count are obtained by normalizing the first feature parameter.

5. The method of claim 1, wherein training data and testing data adopted for the machine learning are the alarm frequent itemset of the traditional network, and machine learning algorithm comprises: a classification algorithm for machine learning, wherein
the classification algorithm comprises any one of decision tree, random forest, logistic regression or perception.

6. The method of any one of claims 1-5, before mining second alarm data of a network to be modeled based on the frequent itemset, further comprising: initializing for a second time, which comprises initializing the topological relation or a service relation or a professional relation or an alarm severity or an expert knowledge base of the network element equipment according to standards and specifications of operators, and initializing the word segmentation list, wherein the word segmentation list contains keywords for segmenting a descriptive statement.

7. The method of claim 6, wherein mining second alarm data of a network to be modeled based on the frequent itemset comprises: mining the network to be modeled by a default mining algorithm to obtain a combination of the frequent itemset of the second alarm data, wherein the combination of the frequent itemset of the second alarm data can serve as a candidate combination of the second alarm root-cause relational tree model, wherein all data are mined for mining the second alarm data of the network to be modeled.

8. A device for constructing an alarm root-cause relational tree model of a cloud network, comprising a processor (211), a memory (212) and a communication bus (214), wherein
the communication bus (214) is configured for communication between the processor (211) and the memory (212); and
the processor (211) is configured to execute one or more computer programs stored in the memory (212) to perform the method of any one of claims 1 to 7.

9. A computer-readable storage medium storing one or more computer programs which, when executed by one or more processors, cause the one or more processors to perform the method of any one of claims 1 to 7.

## Patentansprüche

1. Verfahren zur Erstellung eines relationalen Alarmursachenbaummodells eines Cloud-Netzwerks, umfassend:
Mining von ersten Alarmdaten eines herkömmlichen Netzwerks basierend auf einem Frequent-Item-Set, um ein erstes Alarmbaummodell zu erhalten (S201), und Heranziehen einer herkömmlichen Expertenwissensbasis als ein Label zum Extrahieren eines Merkmals des ersten Alarmbaummodells, um einen ersten Merkmalsparameter zu erhalten (S202);
Selbstdefinieren einer Mehrzahl von Klassifikationstypen basierend auf einer Default-Klassifikationsregel, und Bestimmen eines Klassifikationsgewichtungswertes, der jedem der Mehrzahl von Klassifikationstypen in dem ersten Alarmbaummodel entspricht, durch maschinelles Lernen (S203); und
Mining von zweiten Alarmdaten eines im Cloud-Netzwerk zu modellierenden Netzwerks, basierend auf dem Frequent-Item-Set (S204), und Modellieren der zweiten Alarmdaten unter Verwendung des Klassifikationsgewichtungswerts durch maschinelles Lernen, um ein zweites Alarmbaummodell zu erhalten, wobei die zweiten Alarmdaten Ursachendaten (S205) sind;
vor Mining erster Alarmdaten eines herkömmlichen Netzwerks basierend auf einem Frequent-Item-Set, um ein erstes Alarmbaummodell zu erhalten (S201), ferner umfassend Initialisieren, wobei
Initialisieren umfasst: Initialisieren einer topologischen Relation oder einer Service-Relation oder einer professionellen Relation oder eines Alarmschweregrads oder einer Expertenwissensbasis von einer Netzwerkelementausstattung gemäß einem Standard und einer Spezifikation eines Betreibers, und Initialisieren einer Wortsegmentierungsliste, wobei die Wortsegmentierungsliste Schlüsselwörter zur Segmentierung einer deskriptiven Aussage enthält;
nach der Initialisierung und vor Mining erster Alarmdaten eines herkömmlichen Netzwerks basierend auf einem Frequent-Item-Set, um ein erstes Alarmbaummodell zu erhalten, ferner umfassend: Extrahieren einer Regelbasis, die primäre und sekundäre Alarmdaten aus der Expertenwissensbasis erzeugt, wobei
die Regelbasis die primären und sekundären Alarmdaten als Eltern- und Kindknoten des Baummodells nimmt, um ein Eltern-Kind-Relationsbaummodell zu bilden, wobei die primären Alarmdaten die Elternknoten und die sekundären Alarmdaten die Kindknoten sind, und die Regelbasis ferner Beschränkungsbedingungen auf den Alarmdaten umfasst.

2. Verfahren nach Anspruch 1, wobei Mining von ersten Alarmdaten eines herkömmlichen Netzwerks basierend auf einem Frequent-Item-Set, um ein erstes Alarmbaummodell (S201) zu erhalten, umfasst: Mining des herkömmlichen Netzwerks durch einen Default-Mining-Algorithmus, um eine Kombination des Frequent-Item-Set der ersten Alarmdaten zu erhalten, wobei die Kombination des Frequent-Item-Set der ersten Alarmdaten als eine Kandidatenkombination des ersten relationalen Alarmursachenbaummodells dienen kann.

3. Verfahren nach Anspruch 2, wobei das Mining des herkömmlichen Netzwerks durch einen Default-Mining-Algorithmus Mining von Alarmdaten des gesamten Volumens und Mining von spezifizierten Alarmdaten umfasst, wobei
das Mining von Alarmdaten des gesamten Volumens dazu ist, alle Alarme zu minen; und
das Mining spezifizierter Alarmdaten dazu ist, auf zum ersten Mal erhaltenen Alarmdaten unterteiltes Mining gemäß Zeitintervallen und Interrelationen durchzuführen.

4. Verfahren nach Anspruch 1, wobei Selbstdefinieren einer Mehrzahl von Klassifikationstypen basierend auf einer Default-Klassifikationsregel umfasst: Definieren einer Mehrzahl von Dimensionen als Merkmale zur Klassifikation basierend auf einer Default-Dimensionsklassifikationsregel, wobei
die Mehrzahl der Dimensionen umfasst: eine topologische Relation oder eine Service-Relation oder eine professionelle Relation oder einen Alarmschweregrad oder eine Frequent-Item-Set Unterstützung und Konfidenz oder ein Alarmvorkommen-Intervall oder einen Alarmvorkommen-Zähler eines Netzwerkelements unter den Alarmen;
die topologische Relation oder eine Service-Relation oder eine professionelle Relation oder ein Alarmschweregrad gemäß den Netzwerken der Betreiber bestimmt sind und konstant bleiben; und
die Frequent-Item-Set Unterstützung und Konfidenz oder ein Alarmvorkommen-Intervall oder ein Alarmvorkommen-Zähler durch Normalisieren des ersten Merkmalsparameters erhalten sind.

5. Verfahren nach Anspruch 1, wobei Trainingsdaten und Testdaten, die für das maschinelle Lernen angenommen sind, das Alarm-Frequent-Item-Set des herkömmlichen Netzwerks sind, und ein Algorithmus des maschinellen Lernens umfasst: einen Klassifikationsalgorithmus für maschinelles Lernen, wobei
der Klassifikationsalgorithmus irgendeinen aus Entscheidungsbaum, Random-Forest, logistischer Regression oder Perception enthält.

6. Verfahren nach einem der Ansprüche 1 bis 5, wobei es vor Mining zweiter Alarmdaten eines zu modellierenden Netzwerks basierend auf dem Frequent-Item-Set ferner umfasst: ein zweites Mal Initialisieren, was Initialisieren der topologischen Relation oder einer Service-Relation oder einer professionellen Relation oder eines Alarmschweregrads oder einer Expertenwissensbasis der Netzwerkelementausstattung gemäß Standards und Spezifikationen von Betreibern umfasst, und Initialisieren der Wortsegmentierungsliste, wobei die Wortsegmentierungsliste Schlüsselwörter zur Segmentierung einer deskriptiven Aussage enthält.

7. Verfahren nach Anspruch 6, wobei Mining zweiter Alarmdaten eines zu modellierenden Netzwerks basierend auf dem Frequent-Item-Set umfasst: Mining des zu modellierenden Netzwerks durch einen Default-Mining-Algorithmus, um eine Kombination des Frequent-Item-Set der zweiten Alarmdaten zu erhalten, wobei die Kombination des Frequent-Item-Set der zweiten Alarmdaten als eine Kandidatenkombination des zweiten Alarmursachenbaummodells dienen kann, wobei alle Daten für das Mining der zweiten Alarmdaten des zu modellierenden Netzwerks gemined sind.

8. Vorrichtung zur Erstellung eines relationalen Alarmursachenbaummodells eines Cloud-Netzwerks, umfassend einen Prozessor (211), einen Speicher (212) und einen Kommunikationsbus (214), wobei der Kommunikationsbus (214) zur Kommunikation zwischen Prozessor (211) und Speicher (212) konfiguriert ist; und
der Prozessor (211) dazu konfiguriert ist, ein oder mehrere Computerprogramme, die auf dem Speicher gespeichert sind, auszuführen, um das Verfahren nach einem der Ansprüche 1 bis 7 durchzuführen.

9. Computerlesbares Speichermedium, das ein oder mehrere Computerprogramme speichert, die, wenn sie von einem oder mehreren Prozessoren ausgeführt werden, den einen oder die mehreren Prozessoren veranlassen, das Verfahren nach einem der Ansprüche 1 bis 7 durchzuführen.

## Revendications

1. Un procédé de construction d'un modèle d'arbre relationnel de cause première d'alarme d'un réseau cloud, comprenant :
le fait d'extraire des premières données d'alarme d'un réseau traditionnel sur la base d'un ensemble d'éléments fréquents pour obtenir un premier modèle d'arbre d'alarme (S201), et de prendre une base de connaissances traditionnelles d'experts comme étiquette pour extraire une caractéristique du premier modèle d'arbre d'alarme afin d'obtenir un premier paramètre de fonctionnalité (S202) ;
le fait d'auto-définir une pluralité de types de classification sur la base d'une règle de classification par défaut, et de déterminer une valeur de pondération de classification correspondant à chaque type de la pluralité de types de classification dans le premier modèle d'arbre d'alarme par apprentissage automatique (S203) ; et
le fait d'extraire des deuxièmes données d'alarme d'un réseau à modéliser dans le réseau cloud sur la base de l'ensemble d'éléments fréquents (S204), et de modéliser les deuxièmes données d'alarme en utilisant la valeur de pondération de classification par apprentissage automatique pour obtenir un deuxième modèle d'arbre d'alarme, les deuxièmes données d'alarme étant des données de cause première (S205) ;
avant d'extraire les premières données d'alarme d'un réseau traditionnel sur la base d'un ensemble d'éléments fréquents pour obtenir un premier modèle d'arbre d'alarme (S201), comprenant en outre le fait d'initialiser,
l'initialisation comprenant : le fait d'initialiser une relation topologique ou une relation de service ou une relation professionnelle ou une gravité d'alarme ou une base de connaissances d'experts d'équipements d'éléments de réseau selon une norme et une spécification d'un opérateur, et le fait d'initialiser une liste de segmentation de mots, la liste de segmentation de mots contenant des mots-clés pour segmenter un état descriptif ;
après initialisation et avant extraction de premières données d'alarme d'un réseau traditionnel sur la base d'un ensemble d'éléments fréquents pour obtenir un premier modèle d'arbre d'alarme, comprenant en outre : le fait d'extraire une base de règles qui génère des données d'alarme primaires et secondaires à partir de la base de connaissances d'experts, dans lequel
la base de règles prend les données d'alarme primaires et secondaires en tant que noeuds parent et enfant du modèle d'arbre pour former un modèle d'arbre de relation parent-enfant, les données d'alarme primaires sont les noeuds parents et les données d'alarme secondaires sont les noeuds enfants, et la base de règles comprend en outre des conditions de contrainte sur les données d'alarme.

2. Le procédé selon la revendication 1, dans lequel l'extraction de premières données d'alarme d'un réseau traditionnel basée sur un ensemble d'éléments fréquents pour obtenir un premier modèle d'arbre d'alarme (S201) comprend : le fait d'explorer le réseau traditionnel par un algorithme d'extraction par défaut pour obtenir une combinaison de l'ensemble d'éléments fréquents des premières données d'alarme, la combinaison de l'ensemble d'éléments fréquents des premières données d'alarme étant apte à servir de combinaison candidate du premier modèle d'arbre relationnel de cause première d'alarme.

3. Le procédé selon la revendication 2, dans lequel l'exploration du réseau traditionnel par un algorithme d'extraction par défaut comprend le fait d'extraire des données d'alarme en volume complet et le fait d'extraire des données d'alarme spécifiées, dans lequel
l'extraction de données d'alarme en volume complet consiste à extraire toutes les alarmes ; et
l'extraction d'alarmes spécifiée consiste à effectuer une extraction subdivisée sur des données d'alarme obtenues pour la première fois selon des intervalles de temps et des interrelations.

4. Le procédé selon la revendication 1, dans lequel l'autodéfinition des types de classification sur la base d'une règle de classification par défaut comprend : le fait de définir une pluralité de dimensions comme caractéristiques pour une classification sur la base d'une règle de classification de dimensions par défaut,
la pluralité de dimensions comprend : une relation topologique ou une relation de service ou une relation professionnelle ou une gravité d'alarme ou une prise en charge et une confiance d'un ensemble d'éléments fréquents ou un intervalle d'occurrence d'alarme ou un nombre d'occurrences d'alarme d'éléments de réseau parmi les alarmes ;
la relation topologique ou une relation de service ou une relation professionnelle ou une gravité d'alarme sont déterminées en fonction des réseaux des opérateurs et restent constantes ; et
la prise en charge et la confiance d'un ensemble d'éléments fréquents ou d'un intervalle d'occurrence d'alarme ou d'un nombre d'occurrences d'alarme sont obtenues par normalisation du premier paramètre de caractéristique.

5. Le procédé selon la revendication 1, dans lequel les données d'apprentissage et les données de test adoptées pour l'apprentissage automatique constituent l'ensemble d'éléments fréquents d'alarme du réseau traditionnel, et l'algorithme d'apprentissage automatique comprend : un algorithme de classification pour l'apprentissage automatique, dans lequel
l'algorithme de classification comprend l'un quelconque parmi un arbre de décision, une forêt aléatoire, une régression logistique ou une perception.

6. Le procédé selon l'une quelconque des revendications 1 à 5, comprenant en outre, avant d'extraire des deuxièmes données d'alarme d'un réseau à modéliser sur la base de l'ensemble d'éléments fréquents : le fait d'initialiser une deuxième fois, qui comprend le fait d'initialiser la relation topologique ou une relation de service ou une relation professionnelle ou une gravité d'alarme ou une base de connaissances d'experts de l'équipement élément de réseau selon des normes et spécifications d'opérateurs, et le fait d'initialiser la liste de segmentation de mots, la liste de segmentation de mots contenant des mots-clés pour segmenter un état descriptif.

7. Le procédé selon la revendication 6, dans lequel l'extraction de deuxièmes données d'alarme d'un réseau à modéliser sur la base de l'ensemble d'éléments fréquents comprend :
le fait d'explorer le réseau à modéliser par un algorithme d'extraction par défaut de façon à obtenir une combinaison de l'ensemble d'éléments fréquents des deuxièmes données d'alarme, la combinaison de l'ensemble d'éléments fréquents des deuxièmes données d'alarme étant apte à servir en tant que combinaison candidate du deuxième modèle d'arbre relationnel de cause première d'alarme, toutes les données étant extraites pour l'extraction des deuxièmes données d'alarme du réseau à modéliser.

8. Un dispositif pour construire un modèle d'arbre relationnel de cause première d'alarme d'un réseau cloud, comprenant un processeur (211), une mémoire (212) et un bus de communication (214), dans lequel
le bus de communication (214) est configuré pour communiquer entre le processeur (211) et la mémoire (212) ; et
le processeur (211) est configuré pour exécuter un ou plusieurs programmes informatiques stockés dans la mémoire (212) afin de mettre en oeuvre le procédé de l'une quelconque des revendications 1 à 7.

9. Un support de stockage lisible par ordinateur stockant un ou plusieurs programmes informatiques qui, lorsqu'ils sont exécutés par un ou plusieurs processeurs, amènent le ou les processeurs à mettre en oeuvre le procédé de l'une quelconque des revendications 1 à 7.
